# EUROPÄISCHE PATENTSCHRIFT

(11) **EP 3 903 563 B1**
(45) Veröffentlichungstag und Bekanntmachung des Hinweises auf die Patenterteilung: **26.03.2025**
(21) Anmeldenummer: 21170996.9
(22) Anmeldetag: 28.04.2021
(51) Int. Cl.: A01F 15/10

(54) **FÖRDER- UND SAMMELVORRICHTUNG MIT EINER ANTREIBBAREN FÖRDER- UND SAMMELEINHEIT UND LANDWIRTSCHAFTLICHE ERNTEGUTPRESSE MIT DER FÖRDER- UND SAMMELVORRICHTUNG**
CONVEYING AND COLLECTING DEVICE WITH A DRIVABLE CONVEYING AND COLLECTING UNIT AND AGRICULTURAL HARVESTING PRESS WITH THE CONVEYING AND COLLECTING DEVICE
DISPOSITIF DE TRANSPORT ET DE COLLECTE DOTÉ D'UNE UNITÉ DE TRANSPORT ET DE COLLECTE POUVANT ÊTRE ENTRAÎNÉE ET PRESSE DE RÉCOLTE AGRICOLE POURVU DE DISPOSITIF DE TRANSPORT ET DE COLLECTE

(30) Priorität: 29.04.2020 DE 102020002580
(43) Veröffentlichungstag der Anmeldung: 03.11.2021
(73) Patentinhaber: Maschinenfabrik Bernard Krone GmbH & Co. KG, 48480 Spelle (DE)
(72) Erfinder: Meiners, Michael, 48480 Schapen (DE)

(56) Entgegenhaltungen:
- DE-A1- 19 829 276
- DE-U1- 20 104 700
- US-A- 6 161 368

## Beschreibung

Die vorliegende Erfindung betrifft eine Förder- und Sammelvorrichtung für eine landwirtschaftliche Erntegutpresse, mit einer antreibbaren Förder- und Sammeleinheit, die von einem Sammelmodus, in der sie zum Sammeln von Erntegut in eine Sammelkammer vorgesehen ist, in einen Hubmodus, in der sie zum Herausfördern des Erntegutes aus der Sammelkammer vorgesehen ist, umschaltbar ist, wobei die Förder- und Sammeleinheit eine Zubringerleiste umfasst, deren Zubringerzinken in Abhängigkeit vom Modus der Förder- und Sammeleinheit drehbar sind, mit einer ersten Kurvenbahn, die zum Drehen der Zubringerzinken der Zubringerleiste vorgesehen ist, und die von einem fixierten Zustand, in dem sie ortsfest in der Förder- und Sammelvorrichtung angeordnet ist und sich die Förder- und Sammeleinheit im Sammelmodus befindet, in einen bewegten Zustand, in dem sie von der Förder- und Sammeleinheit angetrieben ist und sich die Förder- und Sammeleinheit im Hubmodus befindet, umschaltbar ist, mit einer Kupplungsvorrichtung, die in einem Kupplungsvorgang zum Wirkverbinden der ersten Kurvenbahn mit der Förder- und Sammeleinheit vorgesehen ist, so dass die erste Kurvenbahn angetrieben wird, und mit einer Sensoreinheit, die zum Erfassen eines Füllgrades der Sammelkammer vorgesehen ist. Die vorliegende Erfindung betrifft weiterhin eine landwirtschaftliche Erntegutpresse mit einer solchen Förder- und Sammelvorrichtung.

Die Druckschrift DE 198 29 276 A1 offenbart eine Aufsammelpresse für landwirtschaftliches Erntegut. Die Aufsammelpresse weist eine Vorpresseinheit auf, mit einem Förderkanal und einem Förderer, wobei der Förderer mehrere Rechen jeweils mit mehreren entlang einer drehbaren Welle angeordneten Zinken umfasst, die um eine zentrale Rotorwelle rotieren und das Erntegut dabei durch den Förderkanal fördern. Die Vorpresseinheit ist zum Vorpressen des Ernteguts vorgesehen. Dafür ist eine Öffnung des Förderkanals solange verschlossen, bis das im Förderkanal befindliche Erntegut ausreichend verdichtet ist. Bei ausreichender Verdichtung wird es mittels eines als Zubringerrechen ausgebildeten Rechens des Förderers durch die Öffnung in einen Presskanal gefördert. Dies ist nur in dem Zeitfenster, in dem ein zum Pressen des Ernteguts im Presskanal vorgesehener Kolben die Öffnung freigibt, möglich.

Um die Verdichtung zu erfassen, weist die Aufsammelpresse eine Drucksensorvorrichtung auf, mit mehreren Halteplatten, die um eine Haltewelle schwenkbar befestigt sind, und die in den Förderkanal eingreifen. Bei ausreichendem Füllgrad beziehungsweise ausreichender Verdichtung des Ernteguts schwenken die Halteplatten aus dem Förderkanal aus. Dadurch wird die Öffnung freigegeben und der Zubringerrechen fördert das Erntegut in den Presskanal.

Der Drehwinkel, den die Zinken der Rechen jeweils einnehmen, wird mithilfe von Kurvenbahnen eingestellt. Während die Zinken des Zubringerrechens das Erntegut durch die Öffnung in den Presskanal fördern, dürfen sie sich nicht aus dem Förderkanal herausdrehen. Dafür wird eine Kurvenbahn, die die Zinkenstellung vorgibt, währenddessen bewegt. Die Bewegung der Kurvenbahn wird in Abhängigkeit vom Füllgrad des Zubringerkanals durch die Drucksensorvorrichtung ausgelöst. Die Drucksensorvorrichtung ist mechanisch über ein Schaltgestänge mit einer Amboßklinke verbunden, die eine Schaltklinke einer Drehkupplung freigibt, wenn sich die Halteplatten aus dem Zubringerkanal drehen. Mit der Drehkupplung wird die bewegliche Kurvenbahn dann an die Rotorwelle gekuppelt, so dass sie sich mit dieser dreht.

Durch das Schaltgestänge ist die Amboßklinke daher zwangsgesteuert mit den Halteplatten der Drucksensorvorrichtung verbunden.

Jedoch kann es in Grenzfällen aufgrund der Trägheit einer solchen mechanischen Kopplung zu Fehlschaltungen kommen, beispielsweise, wenn der Füllgrad im Förderkanal während eines Zeitfensters, in dem der Presskolben die Öffnung zum Presskanal freigibt, zwar nahezu erreicht ist, die Halteplatten aber noch nicht aus dem Förderkanal ausgeschwenkt sind und die Schaltklinke zum Kuppeln der beweglichen Kurvenbahn an die Rotorwelle daher noch nicht freigegeben ist. Der Förderkanal kann dann im folgenden Zeitfenster verstopfen.

Der Mechanismus kann auch nach einem kontinuierlich eingeschalteten Förderhub, bei dem bei jedem Kolbenhub Erntegut in den Presskanal gefördert wird, aus dem Takt geraten, wenn der Füllgrad nur geringfügig abnimmt, die Schaltklinke aufgrund der Trägheit der Kopplung aber noch freigegeben ist, obwohl die Amboßklinke für den Sammelbetrieb bereits wieder zurückgeschwenkt ist.

In Grenzbereichen wie insbesondere beim An- und Auslaufen der Presse muss zudem genügend Leistung zum Umschalten der Zinkenstellung des Zubringerrechens vom Sammeln des Ernteguts im Förderkanal zum Herausfördern des Ernteguts aus dem Förderkanal zur Verfügung gestellt werden, damit eine gleichmäßige Ballenfüllung und -Form gewährleistet ist.

Die Druckschrift DE 201 04 700 U1 offenbart eine Kolbenpresse für Erntegutballen, mit einem in einem Presskanal hin- und herbewegbaren Presskolben; einem in den Presskanal mündenden Zuführkanal, in welchem ein von einem Kurbeltrieb getriebener Raffer bewegbar ist, der mit Rafferspitzen fördernde Rafferhebel aufweist, mit einem Steuertrieb, und mit einer Umschaltvorrichtung zum Ändern der vom Steuertrieb eingestellten Bewegungsbahn der Rafferspitzen zwischen Lade- und Zuführhüben.

Aufgabe der Erfindung ist es, eine Ballenpresse zu schaffen, bei der das Umschalten vom Sammelmodus in den Hubmodus und zurück auch in Grenzbereichen zuverlässig und fehlerfrei erfolgt, die eine gleichmäßige Ballenfüllung und -Form gewährleistet und die sowohl bezüglich der Kosten für die Ballenpresse als auch der Betriebskosten der Ballenpresse kostengünstig ist.

Die Aufgabe wird gelöst mit einer Förder- und Sammelvorrichtung mit den Merkmalen des unabhängigen Patentanspruchs 1, und mit einer landwirtschaftlichen Erntegutpresse mit den Merkmalen des unabhängigen Patentanspruchs 13. Vorteilhafte Ausführungsformen sind den abhängigen Ansprüchen entnehmbar.

Dafür wird eine Förder- und Sammelvorrichtung für eine landwirtschaftliche Erntegutpresse geschaffen. Die Förder- und Sammelvorrichtung weist eine antreibbare Förder- und Sammeleinheit auf, die von einem Sammelmodus, in der sie zum Sammeln von Erntegut in eine Sammelkammer vorgesehen ist, in einen Hubmodus, in der sie zum Herausfördern des Erntegutes aus der Sammelkammer vorgesehen ist, umschaltbar ist.

Zum Sammeln des Erntegutes weist die Förder- und Sammeleinheit eine Zubringerleiste auf. Entlang der Zubringerleiste sind Zubringerzinken gleichmäßig verteilt angeordnet. Die Zubringerzinken erstrecken sich in dieselbe Richtung. Weiterhin ist die Zubringerleiste um eine Zubringerachse, die sich in Richtung der Zubringerleiste erstreckt, drehbar vorgesehen. Dadurch ist ein Drehwinkel der Zubringerzinken veränderbar. Die Zubringerzinken sind in Abhängigkeit vom Modus der Förder- und Sammeleinheit drehbar.

Die Förder- und Sammelvorrichtung weist zudem eine erste Kurvenbahn auf. Die erste Kurvenbahn ist zum Drehen der Zubringerzinken der Zubringerleiste vorgesehen. Dafür wird die Zubringerleiste entlang der Kurvenbahn geführt. Der Drehwinkel der Zubringerzinken verstellt sich dabei in Abhängigkeit vom Verlauf der Kurvenbahn. Die Kurvenbahn ist von einem fixierten Zustand, in dem sie in der Förder- und Sammelvorrichtung ortsfest angeordnet ist und sich die Förder- und Sammeleinheit im Sammelmodus befindet, in einen bewegten Zustand umschaltbar, in dem sie von der Förder- und Sammeleinheit angetrieben ist und sich die Förder- und Sammeleinheit im Hubmodus befindet. Durch die Bewegung der Kurvenbahn im Hubmodus verändert sich der Drehwinkel der Zubringerzinken im Hubmodus anders als im Sammelmodus. Dadurch können die Zubringerzinken im Hubmodus Erntegut aus dem Sammelkanal herausfördern.

Die Förder- und Sammelvorrichtung umfasst zudem eine Kupplungsvorrichtung, die in einen Kupplungsvorgang zum Wirkverbinden der ersten Kurvenbahn mit der Förder- und Sammeleinheit vorgesehen ist. Wenn die erste Kurvenbahn mit der Förder- und Sammeleinheit wirkverbunden ist, wird sie angetrieben. Die Förder- und Sammeleinheit befindet sich dann im Hubmodus.

Um den Füllgrad der Sammelkammer zu erfassen, weist die Förder- und Sammelvorrichtung zudem eine Sensoreinheit auf.

Die Förder- und Sammelvorrichtung weist ein Schaltmittel auf, das dazu vorgesehen ist, den Kupplungsvorgang der Kupplungsvorrichtung in Abhängigkeit vom Füllgrad der Sammelkammer auszulösen oder zu verhindern.

Die Förder- und Sammelvorrichtung zeichnet sich dadurch aus, dass das Auslösen oder Verhindern des Kupplungsvorgangs mechanisch unabhängig von der Erfassung des Füllgrades der Sammelkammer erfolgt.

Da der Kupplungsvorgang mechanisch unabhängig von der Erfassung des Füllgrades der Sammelkammer ausgelöst oder verhindert wird, kann es erst gar nicht zu Fehlschaltungen aufgrund der Trägheit einer mechanischen Kopplung kommen. Die erfindungsgemäße Förder- und Sammelvorrichtung arbeitet daher auch in Grenzbereichen zuverlässig und fehlerfrei.

Bevorzugt umfasst die Förder- und Sammelvorrichtung einen Schalthebel, mit dem das Schaltmittel zusammenwirkt. Der Schalthebel ist bevorzugt reversibel von einer Grundposition in eine Betätigungsposition verstellbar. Dabei ist das Schaltmittel bevorzugt reversibel von einem aktiven Zustand, in dem es den Schalthebel freigibt, in einen inaktiven Zustand umschaltbar, in dem es den Schalthebel reib- und/oder formschlüssig in der Grundposition hält. Vorzugsweise hält das Schaltmittel den Schalthebel dabei gegen die Kraft eines Vorspannelementes in der Grundposition. Dabei ist es weiterhin bevorzugt, dass der Schalthebel in der Betätigungsposition mit der Kupplungsvorrichtung wirkverbunden ist. Durch Umschalten des Schaltmittels in den aktiven Zustand kann der Schalthebel daher mit der Kraft des Vorspannelementes von der Grundposition in die Betätigungsposition verstellt werden.

Besonders bevorzugt wird als Vorspannelement eine Feder genutzt. Alternativ ist auch ein Hydraulikzylinder nutzbar. Gegenüber dem Hydraulikzylinder hat die Nutzung einer Feder den Vorteil, dass die Kraft der Feder auch in Grenzsituationen wie beispielsweise beim An- und Auslaufen der Presse ohne die Nutzung weiterer, gegebenenfalls aufwändiger Energiespeicher zur Verfügung steht. Auch diesen gewährleistet diese Anordnung daher das Auslösen oder Verhindern des Kupplungsvorgangs, so dass eine gleichmäßige Ballenfüllung und -Form sichergestellt ist.

Die Förder- und Sammelvorrichtung zeichnet sich dadurch aus, dass die Kupplungsvorrichtung ein Kraftmittel aufweist, das zum Aktivieren der Kupplungsvorrichtung vorgesehen ist. Bei aktivierter Kupplungsvorrichtung ist der Kupplungsvorgang zwangsgesteuert durchführbar.

Das Kraftmittel ist bevorzugt als Feder ausgebildet. Weiterhin bevorzugt weist die Kupplungsvorrichtung einen Kupplungsschalter auf, der gegen die Kraft des Kraftmittels verstellbar ist. Dabei ist es besonders bevorzugt, dass die Kupplungsvorrichtung durch Betätigen des Kupplungsschalters deaktivierbar ist. Es ist auch eine umgekehrte Anordnung bevorzugt, bei der die Kupplungsvorrichtung durch die Kraft des Kraftmittels deaktiviert und durch Betätigen des Kupplungsschalters aktiviert wird.

Bei dieser Ausführungsform wird durch Umschalten des Schaltmittels in den aktiven Zustand der Schalthebel von der Grundposition in die Betätigungsposition verstellt, so dass der Schalthebel den Kupplungsschalter betätigt und die Kupplungsvorrichtung deaktiviert. Das Schaltmittel ist bei dieser Ausführungsform daher dazu vorgesehen, den Kupplungsvorgang zu verhindern. Bei einer Fehlfunktion des Schaltmittels und/oder des Schalthebels ist die Kupplungsvorrichtung, insbesondere durch die Kraft des Kraftmittels, aktiviert. Die Förder- und Sammeleinheit wird dann zwangsgesteuert in den Hubmodus versetzt. Eine solche Fehlfunktion kann daher nicht zum Verstopfen des Sammelkanals führen.

Die Förder- und Sammelvorrichtung zeichnet sich zudem dadurch aus, dass das Schaltmittel lediglich zum Deaktivieren der Kupplungsvorrichtung vom inaktiven in den aktiven Zustand umgeschaltet, und daher bestromt, werden muss. Daher kann es sehr kostengünstig betrieben werden. Beim Halten der Last befindet es sich im inaktiven Zustand, bringt sein Haltemoment auf und ist unbestromt.

Die Förder- und Sammeleinheit ist bevorzugt als Rotor ausgebildet und um eine zentrale Rotorachse drehbar vorgesehen. Die Zubringerleiste ist dabei von der Rotorachse beabstandet angeordnet. Zum Sammeln des Erntegutes ist es bevorzugt, dass die Förder- und Sammeleinheit neben der Zubringerleiste zumindest eine oder mehrere Sammelleisten aufweist. Da die Sammelleisten lediglich zum Sammeln des Erntegutes vorgesehen sind, werden ihre Sammelzinken bevorzugt mittels einer zweiten, immer ortsfest in der Förder- und Sammelvorrichtung angeordneten Kurvenbahn, gesteuert.

Dabei ist die Förder- und Sammelvorrichtung bevorzugt dazu eingerichtet, das Erntegut innerhalb eines sich zyklisch wiederholenden Zeitfensters aus der Sammelkammer auszuwerfen. Da das Auslösen oder Verhindern des Kupplungsvorgangs und das Erfassen des Füllgrades der Sammelkammer unabhängig voneinander erfolgen, kann ein Zeitpunkt für das Umschalten innerhalb des zur Verfügung stehenden Zeitfensters sehr genau eingehalten werden.

In dieser Ausführungsform ist es bevorzugt, dass ein Zyklus durch eine volle Umdrehung der Förder- und Sammeleinheit bestimmt ist. Die Förder- und Sammelvorrichtung ist dann bevorzugt dazu eingerichtet, den Füllgrad der Sammelkammer bei jeder vollen Umdrehung der Förder- und Sammeleinheit zumindest einmal zu erfassen und/oder zu prüfen. Das Umschalten erfolgt dabei bevorzugt zu einem spätest möglichen Zeitpunkt, der das Auswerfen in dem aktuellen Zeitfenster noch zulässt. Dadurch kann eine innerhalb des aktuellen Zyklus noch sehr spät in die Sammelkammer einfließende Erntegutmenge bei der Entscheidung, ob das Erntegut aus der Sammelkammer herausgefördert wird oder nicht, berücksichtigt werden.

Zum Steuern des Schaltmittels weist die Förder- und Sammelvorrichtung bevorzugt eine Steuerungseinheit auf. Die Steuerungseinheit ist weiterhin bevorzugt auch zum Erfassen und/oder Prüfen des Füllgrades der Sammelkammer vorgesehen. Die Steuerungseinheit ermöglicht es, Schaltzeiten von Bauteilen zu berücksichtigen. Dadurch kann der Zeitpunkt, an dem sie das Schaltmittel ansteuert, um das Aktivieren oder Deaktivieren der Kupplungsvorrichtung auszulösen, sehr genau bestimmt werden.

Um die erste Kurvenbahn im Hubmodus anzutreiben, ist die Kupplungsvorrichtung bevorzugt dazu eingerichtet, eine Antriebsscheibe an die Förder- und Sammeleinheit anzukuppeln, so dass sich diese mit der Förder- und Sammeleinheit dreht. Vorzugsweise ist die Antriebsscheibe zum Antreiben einer Schwinge ausgebildet, die die erste Kurvenbahn im Hubmodus mittels eines Koppeltriebs antreibt. Der Koppeltrieb ermöglicht während einer Umdrehung der Förder- und Sammeleinheit eine Vor- und Rückbewegung der ersten Kurvenscheibe.

Die Sensoreinheit umfasst bevorzugt eine Tastschwinge mit Halteplatten, die in die Sammelkammer eingreifen, sowie einen Drehwinkelsensor, wobei der Drehwinkelsensor einen Drehwinkel der Tastschwinge erfasst. Um sicher zu stellen, dass die Halteplatten den Gutfluss im Hubmodus nicht behindert, ist es bevorzugt, dass die Antriebsscheibe eine Antriebskontur aufweist, die im Hubmodus zum Herausschwenken der Halteplatten aus der Sammelkammer vorgesehen ist.

Weiterhin bevorzugt umfasst die Kupplungsvorrichtung eine Kupplungsscheibe, die eine Außenkontur aufweist, die sich mit der Förder- und Sammeleinheit dreht und zum Zurückstellen des Schalthebels von der Betätigungsposition in die Grundposition vorgesehen ist. Der Schalthebel wird bevorzugt zyklisch zurückgestellt. Dadurch wird die Kupplungsvorrichtung zyklisch aktiviert. Sofern das Schaltmittel als elektromagnetisch betätigte Federkraftbremse ausgebildet ist, kann das Zurückstellen des Schalthebels zumindest zeitweise gegen die Haltekraft des Schaltmittels erfolgen. Dabei ist das Schaltmittel deaktiviert, so dass es seine Haltekraft aufbringt. Das Zurückstellen des Schalthebels erfolgt dann zudem gegen die Kraft seines Vorspannelementes. Dadurch können Bremsmittel wie beispielsweise Bremsscheiben gereinigt werden. Das Schaltmittel kann beim Zurückstellen des Schalthebels aber auch aktiviert werden oder bleiben. In diesem Fall erfolgt das Zurückstellen nur gegen die Kraft des Vorspannelementes des Schalthebels. Erst danach wird das Schaltmittel deaktiviert. Da das Schaltmittel dabei seine Haltekraft nicht aufbringt, können Bremsmittel dann aber nicht gereinigt werden.

Die Aufgabe wird weiterhin gelöst mit einer landwirtschaftlichen Erntegutpresse, insbesondere mit einer Quaderballenpresse, mit einer solchen Förder- und Sammelvorrichtung. Die Erntegutpresse kann auch eine Rundballenpresse, insbesondere eine kontinuierlich arbeitende Rundballenpresse, die eine Vorkammer zum Vorpressen eines Ballens aufweist, sein.

In einer bevorzugten Ausführungsform weist die landwirtschaftliche Erntegutpresse eine Bedieneinheit auf, wobei der Sollwert für den Füllgrad der Sammelkammer an der Bedieneinheit von einem Bediener der Erntegutpresse einstellbar ist. Sofern die landwirtschaftliche Erntegutpresse eine gezogene Erntegutpresse ist, kann eine solche Bedieneinheit auch in einer Zugmaschine angeordnet sein, an die die landwirtschaftliche Erntegutpresse angehängt ist, wobei der Sollwert dann an der Bedieneinheit der Zugmaschine einstellbar ist.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine landwirtschaftliche Erntegutpresse gemäß dem Stand der Technik;
- Fig. 2: in (a) und (b) schematisch eine Förder- und Sammelvorrichtung für eine erfindungsgemäße landwirtschaftliche Erntegutpresse in verschiedenen perspektivischen Ansichten;
- Fig. 3: in (a) - (f) jeweils eine Seitenansicht der Förder- und Sammelvorrichtung der Fig. 2.

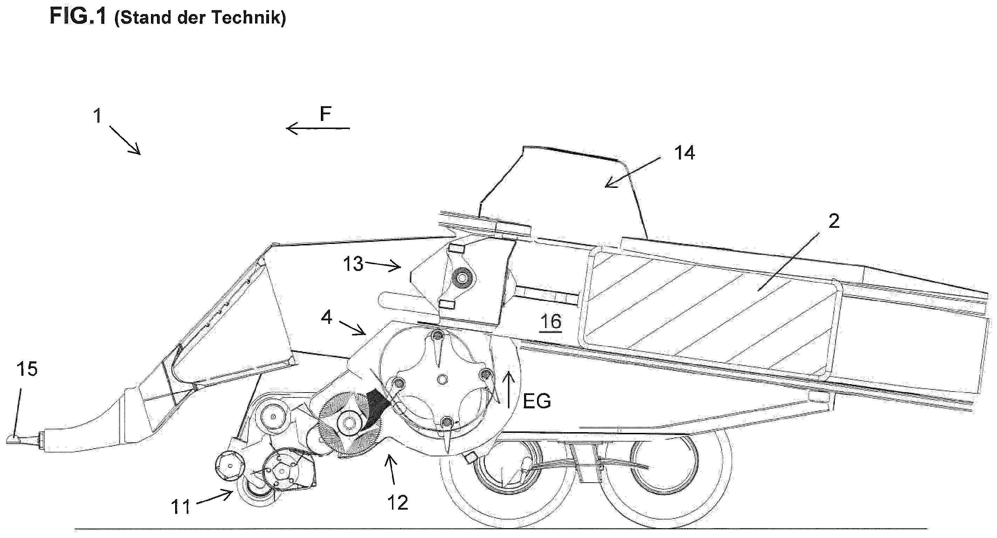

Fig. 1 zeigt schematisch eine landwirtschaftliche Erntegutpresse 1 gemäß dem Stand der Technik. Bei der landwirtschaftlichen Erntegutpresse 1 handelt es sich um eine Quaderballenpresse. Die Erfindung ist aber nicht auf Quaderballenpressen beschränkt, sondern auch für andere Erntegutpressen wie beispielsweise kontinuierlich arbeitende Rundballenpressen, anwendbar, bei denen Erntegut während des Wickelns eines Ballens in einer Vorpresseinheit gesammelt wird, bis der gewickelte Ballen die Presskammer verlässt und diese für das in der Vorpresseinheit vorgepresste Erntegut freigegeben wird.

Im Folgenden werden die Begriffe landwirtschaftlich Erntegutpresse 1 und Quaderballenpresse synonym verwendet.

Die Erntegutpresse 1 der Fig. 1 ist dazu vorgesehen, von einer Zugmaschine (nicht gezeigt) gezogen zu werden. Sie weist dafür in einer Fahrtrichtung F vorne eine Anhängerkupplung 15 auf. Die Erfindung ist aber auch auf selbstfahrenden Erntegutpressen anwendbar.

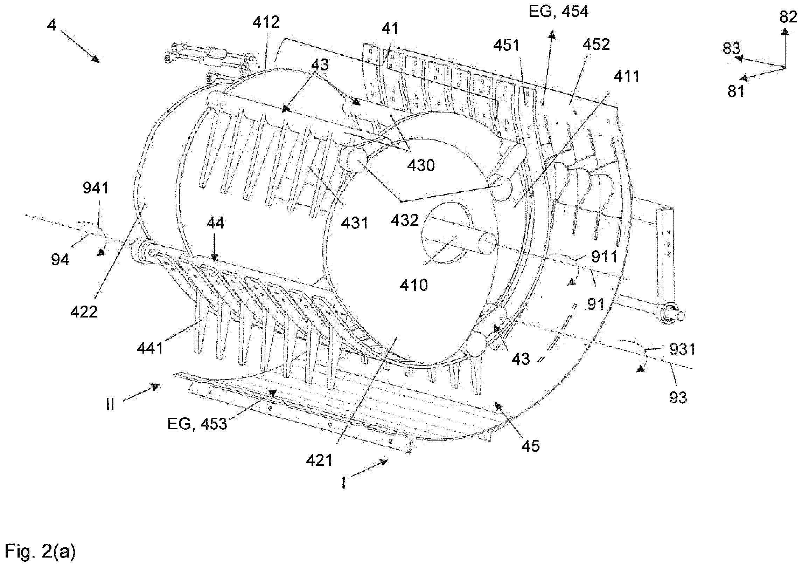

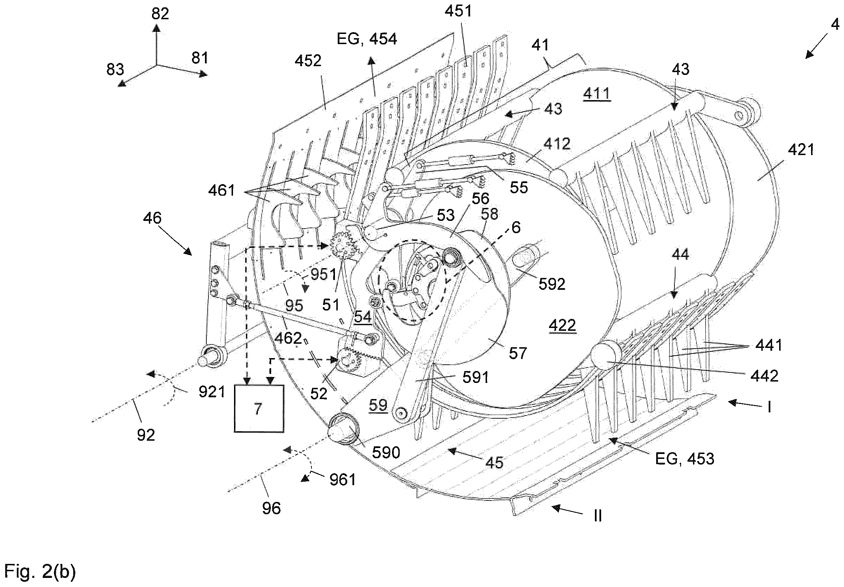

Die Erntegutpresse 1 der Fig. 1 weist als Aufnahmevorrichtung 11 eine Pick- up zur Aufnahme von Erntegut vom Boden auf. Das Erntegut wird einer Schneidvorrichtung 12 zugeführt, die der Aufnahmevorrichtung 11 in einer Gutflussrichtung EG nachgeordnet ist. Nach dem Schneiden wird es einer Förder- und Sammelvorrichtung 4 zugeführt, die zum Sammeln des Ernteguts vorgesehen ist. Die Förder- und Sammelvorrichtung 4 weist eine Sammelkammer 45 (s. Fig. 2) sowie eine Förder- und Sammeleinheit 41 (s. Fig. 2) auf. Die Förder- und Sammeleinheit 41 ist zum Sammeln des Ernteguts in der Sammelkammer 45 vorgesehen. Sie ist hier als Rotor ausgebildet ist und weist mehrere Rechen 43, 44 (s. Fig. 2) auf, die das Erntegut kämmend zu einer Auslassöffnung 454 (s. Fig. 2) der Sammelkammer 45 fördern.

Der Auslassöffnung 454 in Gutflussrichtung EG nachgeordnet ist eine Presseinheit 13 vorgesehen. Bei ausreichender Verdichtung des Erntegutes wird dieses mittels eines als Zubringerrechen 44 (s. Fig. 2) ausgebildeten Rechens 43, 44 der Förder- und Sammeleinheit 41 durch die Auslassöffnung 454 in einen Pressraum 16 der Presseinheit 13 gefördert. Die Presseinheit 13 umfasst einen Presskolben (nicht bezeichnet), der im Pressraum 16 zyklisch hin und her bewegt wird, um das im Pressraum 16 angesammelte Erntegut zu einem Quaderballen 2 zu pressen.

Das Überführen des Ernteguts aus der Förder- und Sammelvorrichtung 4 in den Pressraum 16 ist daher nur in einem Zeitfenster, in dem der zum Pressen des Ernteguts im Pressraum 16 hin- und hergeführte Presskolben die Auslassöffnung 454 freigibt, möglich.

Oberhalb der Presskammer ist eine Bindeeinheit 14 angeordnet, in der Bindematerial (nicht gezeigt) zum Binden des Quaderballens 2 vorgehalten ist. Nach dem Pressen eines vollständigen Ballens 2 wird dieser mittels des Bindematerials von der Bindeeinheit 14 gebunden, so dass er nicht mehr auseinanderfällt.

Fig. 2 zeigt in (a) und (b) schematisch eine Förder- und Sammelvorrichtung 4 für eine erfindungsgemäße landwirtschaftliche Erntegutpresse 1 in verschiedenen perspektivischen Ansichten. Die Förder- und Sammelvorrichtung 4 ist im vorliegenden Ausführungsbeispiel als Bestandteil einer Quaderballenpresse vorgesehen.

Sie weist eine Förder- und Sammeleinheit 41 auf, die hier als Rotor ausgebildet ist. Im Folgenden werden die Begriffe Förder- und Sammeleinheit 41 und Rotor synonym verwendet. Der Rotor 41 weist eine durchgehende Rotorwelle 410 auf. Er erstreckt sich zwischen gegenüberliegenden Seiten I, II der Förder- und Sammelvorrichtung 4, hier in eine Querrichtung 83 quer zu einer Längsrichtung 81 der Förder- und Sammelvorrichtung 4. Auf der Rotorwelle 410 sind zwei Trommelscheibe 411, 412 drehfest gelagert, die voneinander beabstandet sind.

Zum Sammeln von Erntegut wird der Rotor 41 angetrieben so dass er sich um die Rotorwelle 410 dreht.

Die Trommelscheiben 411, 412 sind als Lager für eine Zubringerleiste 44 vorgesehen. Die Zubringerleiste 44 ist von der Rotorwelle 410 beabstandet. Entlang der Zubringerleiste 44 sind in gleichmäßigen Abständen Zubringerzinken 441 angeordnet. Die Zubringerleiste 44 ist auf den Trommelscheiben 411, 412 um eine Zubringerachse 94 drehbar gelagert. Die Zubringerzinken 441, die sich in radialer Richtung zur Zubringerachse 94 erstrecken, sind daher um diese drehbar.

Zudem dienen die Trommelscheiben 411, 412 hier als Lager für mehrere Sammelleisten 43. Auch die Sammelleisten 43 sind von der Rotorwelle 410 in radialer Richtung beabstandet. Entlang der Sammelleisten 43 sind in gleichmäßigen Abständen Sammelzinken 431 angeordnet. Die Sammelleisten 43 sind auf den Trommelscheiben 411, 412 um eine Sammelachse 93 drehbar gelagert, so dass die Sammelzinken 431 jeweils um diejenige Sammelachse 93, entlang der sich ihre Sammelleiste 43 erstreckt, drehbar sind. Auch die Sammelzinken 431 erstrecken sich in radialer Richtung zu ihrer Sammelachse 43.

Die Förder- und Sammelvorrichtung 4 weist zudem eine Sammelkammer 45 auf, die hier als Sammelkanal ausgebildet ist, und eine Einlassöffnung 453 sowie eine Auslassöffnung 454 aufweist. Im Folgenden werden die Begriffe Sammelkammer 45 und Sammelkanal synonym verwendet. Der Sammelkanal 45 ist durch einen Kanalboden 452 begrenzt. Zudem ist der Rotor 41 von Abstreifern 451 umgeben, die in Querrichtung 83 voneinander beabstandet sind, so dass zwischen den Abstreifern 451 Spalte (nicht bezeichnet) vorgesehen sind. Die Zinken 431, 441 der Sammelleisten 43 und der Zubringerleiste 44 durchgreifen die Spalte während eines Umlaufs des Rotors 41 zumindest bereichsweise, so dass sie in den Sammelkanal 45 hineinragen.

Im Betrieb der Förder- und Sammeleinheit 41 sind die Zinken 431, 441 dafür vorgesehen, den Sammelkanal 45 zu durchkämmen. Dabei fördern sie im Sammelkanal 45 befindliches Erntegut von der Einlassöffnung 453 in Gutflussrichtung EG zur Auslassöffnung 454.

Im Sammelkanal 45 kann das Erntegut vorgepresst werden. Dafür wird ein Sollwert für den Füllgrad des Sammelkanals 45 eingestellt. Zum Messen des Füllgrads des Sammelkanals 45 weist die Förder- und Sammelvorrichtung 4 eine Sensoreinheit 52, 46 auf, die eine Tastschwinge 46 sowie einen Drehwinkelsensor 52 umfasst, wobei der Drehwinkelsensor 52 mit der Tastschwinge 46 wirkverbunden ist und den Drehwinkel, um den die Tastschwinge 46 verstellt wird, misst.

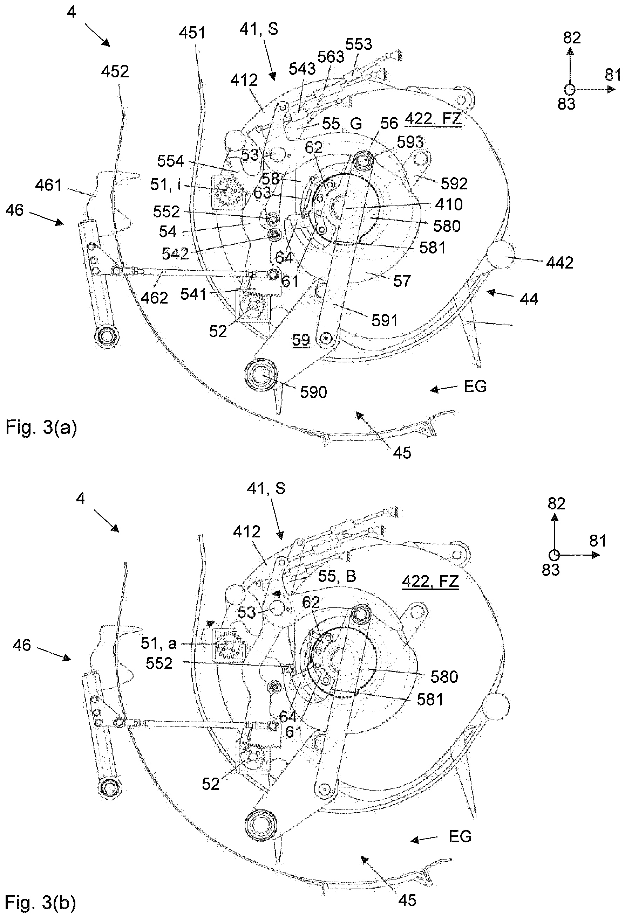

Zum Messen des Füllgrades des Sammelkanals 45 ist die Tastschwinge 46 um eine Tastachse 92 drehbar gelagert und weist Halteplatten 461 auf, welche Schlitze (nicht bezeichnet) im Kanalboden 452 durchgreifen und in den Sammelkanal 45 hineinragen. Das im Sammelkanal 45 gesammelte Erntegut verdrängt die Halteplatten 461, so dass die Tastschwinge 46 um die Tastachse 92 verschwenkt wird. Die Tastschwinge 46 ist über einen Verbindungsarm 462 mit einem Tasthebel 54 (s. Fig. 3 (a)) verbunden, der dabei um eine Lagerachse 95 (s. Fig. 2 (b)) verschwenkt. An einem Sensorende 541 (s. Fig. 3 (a)) des Tasthebels 54 ist eine Verzahnung (nicht bezeichnet) angeordnet, die zur Übersetzung dient und mit einem Stirnrad (nicht bezeichnet) des Drehwinkelsensors 52 in Eingriff ist. Das Stirnrad wird beim Verschwenken des Tasthebels 54 gedreht, so dass der Drehwinkelsensor 52 den Füllgrad im Sammelkanal 45 misst. Der Tasthebel wird gegen die Kraft eines Vorspannmittels 543 verschwenkt, das als Dämpfer dient. Dadurch kann eine Schwingung des Tasthebels 54 schnell abklingen, wenn dieser, beispielsweise durch Erntegut, welches die Tastschwinge 46 verschwenkt, gedreht wird. Zudem ermöglicht das Vorspannmittel 543 auch ein gleichmäßiges Zurückschwenken der Tastschwinge 46, bis die Halteplatten 461 in die Sammelkammer 45 eingreifen.

Um den Füllgrad des Sammelkanals 45 zu erhöhen, wird ein Grundmoment der Tastschwinge 46 erhöht. Dadurch kann mehr Erntegut im Sammelkanal 41 gesammelt und dieses stärker vorgepresst werden, bevor das Erntegut aus dem Sammelkanal 41 in den Pressraum 16 gefördert wird.

Um einen Drehwinkel der Zinken 431, 441 so einzustellen, dass diese den Sammelkanal 45 in definierten Bereichen durchgreifen, sind zwei Kurvenbahnen 421, 422 vorgesehen. Die Kurvenbahnen 421, 422 sind an in Querrichtung 83 gegenüberliegenden Enden der Förder- und Sammeleinheit 41 angeordnet. Dabei ist eine erste Kurvenbahn 422 für die Einstellung des Drehwinkels der Zubringerzinken 441 vorgesehen, und eine zweite Kurvenbahn 421 für die Einstellung des Drehwinkels der Sammelzinken 431.

Die zweite Kurvenbahn 421 ist ortsfest in der Förder- und Sammelvorrichtung 4 angeordnet. Die Sammelleisten 43 weisen jeweils eine Sammelrolle 432 auf, die beim Antrieb der Förder- und Sammeleinheit 41 entlang der zweiten Kurvenbahn 421 geführt wird. Dabei drehen sich die Sammelleisten 43 entsprechend des Verlaufes der zweiten Kurvenbahn 421 um ihre Sammelachse 93, so dass der Drehwinkel ihrer Sammelzinken 431 entsprechend dem Verlauf der zweiten Kurvenbahn 421 festgelegt ist.

In analoger Weise wird die Zubringerleiste 44 mittels einer Zubringerrolle 442 entlang der ersten Kurvenbahn 422 geführt, wobei sich die Zubringerleiste 44 entsprechend des Verlaufs der ersten Kurvenbahn 422 um ihre Zubringerachse 94 dreht. Dadurch wird der Drehwinkel der Zubringerzinken 441 eingestellt. Die erste Kurvenbahn 422 ist aber in Abhängigkeit von einem Modus S, H der Förder- und Sammeleinheit 41 entweder ortsfest in der Förder- und Sammelvorrichtung 4 angeordnet, oder von der Rotorwelle 410 angetrieben.

Die Förder- und Sammeleinheit 41 ist von einem Sammelmodus S, in der sie zum Sammeln des Ernteguts im Sammelkanal 45 vorgesehen ist, in einen Hubmodus H, in der sie zum Auswerfen des Erntegutes aus dem Sammelkanal 45 vorgesehen ist, umschaltbar.

Die Sammelzinken 431 der Sammelleiste 43 sind sowohl im Sammelmodus S als auch im Hubmodus H zum Sammeln von Erntegut vorgesehen.

Demgegenüber sind die Zubringerzinken 441 der Zubringerleiste 44 im Sammelmodus S zum Sammeln vorgesehen. Im Hubmodus H sind sie jedoch dafür vorgesehen, das Erntegut durch die Auslassöffnung 454 aus der Förder- und Sammelvorrichtung 4 auszuwerfen. Im vorliegenden Ausführungsbeispiel wird es von der Förder- und Sammelvorrichtung 4 aus in den Presskanal 16 der Quaderballenpresse 1 gefördert. Dafür dürfen sich die Zubringerzinken 441 beim Annähern an die Auslassöffnung 454 nicht aus dem Sammelkanal 45 herausdrehen. Um dies zu bewerkstelligen, wird die erste Kurvenbahn 422 im Hubmodus H bewegt.

Die erste Kurvenbahn 422 ist dafür von einem fixierten Zustand FZ, in dem sie ortsfest in der Förder- und Sammelvorrichtung 4 angeordnet ist und sich die Förder- und Sammeleinheit 41 im Sammelmodus S befindet, in einen bewegten Zustand BZ, in dem sie von der Förder- und Sammeleinheit 41 angetrieben ist und sich die Förder- und Sammeleinheit 41 im Hubmodus H befindet, umschaltbar.

Um die erste Kurvenbahn 422 anzutreiben, weist die Förder- und Sammelvorrichtung 4 eine Kupplungsvorrichtung 6 auf, die zum Wirkverbinden der ersten Kurvenbahn 422 mit der Förder- und Sammeleinheit 41, insbesondere mit der Rotorwelle 410, vorgesehen ist.

Die Kupplungsvorrichtung 6 wird anhand der Fig. 3 (a) beschrieben.

Die Kupplungsvorrichtung 6 weist ein Kraftmittel 63 auf, das zum Aktivieren der Kupplungsvorrichtung 6 vorgesehen ist. Bei aktivierter Kupplungsvorrichtung 6 ist ein Kupplungsvorgang zwangsgesteuert durchführbar, durch den die erste Kurvenbahn 422 mit der Rotorwelle 410 wirkverbunden wird. Das Kraftmittel 63 ist hier als Feder ausgebildet. Zudem weist die Kupplungsvorrichtung 6 einen Kupplungsschalter 64 auf. Der Kupplungsschalter 64 ist gegen die Kraft des Kraftmittels 63 verstellbar. Durch Betätigen des Kupplungsschalters 64 wird die Kupplungsvorrichtung 6 deaktiviert.

Die Kupplungsvorrichtung 6 umfasst eine Kupplungsscheibe 58, die drehfest an der Rotorwelle 410 angeordnet ist und sich bei Antrieb der Förder- und Sammeleinheit 41 mit dieser dreht. Die Kupplungsscheibe 58 weist ein Schaltfenster 580 auf, in das eine erste und eine zweite Schaltklinke 61, 62 hineinragen, die an einer Antriebsscheibe 57 angeordnet sind. Die Antriebsscheibe 57 ist drehbar auf der Rotorwelle 410 gelagert. Durch Einkuppeln der Schaltklinken 61, 62 in einen Schaltbereich 581 des Schaltfensters 580 ist die Antriebsscheibe 57 an die Rotorwelle 410 ankuppelbar, so dass sie sich mit dieser dreht.

Die Antriebsscheibe 57 ist über eine erste Koppelstange 591 mit einer Schwinge 59 verbunden, die um einen Schwingensteg 590 drehbar gelagert ist. Die Schwinge 59 ist über eine zweite Koppelstange 592 mit der ersten Kurvenbahn 422 verbunden.

Die erste Koppelstange 591 zum Antrieb der Schwinge 59 wird bei ausgekuppelter Kupplungsvorrichtung 6 über einen Nullsteller 56 mit der Kraft eines Rückstellmittels 563 in einer definierten Position gehalten. Bei eingekuppelter Kupplungsvorrichtung 6 und angetriebener Antriebsscheibe 57 wird die Kraft des Vorspannelementes 563 überwunden und die erste Koppelstange 591 gegen die Kraft des Rückstellmittels 563 aus dem Nullsteller 6 gedreht.

Dabei wird die Schwinge 59 um den Schwingensteg 590 hin- und zurückgedreht. Dadurch dreht sich die Kurvenscheibe 422 hin und zurück. Die Förder- und Sammeleinheit 41 befindet sich dann im Hubmodus H. Dadurch drehen sich die Zubringerzinken 441 bei Annäherung an die Auslassöffnung 454 in örtlicher Hinsicht erheblich später aus dem Sammelkanal 45 heraus. Dadurch können sie das Erntegut vom Sammelkanal 45 durch die Auslassöffnung 454 in den Pressraum 16 fördern.

Die Schaltklinken 61, 62 der Kupplungsvorrichtung 6 sind über das Kraftmittel 63 zueinander vorgespannt. Dadurch läuft die erste Schaltklinke 61 bei einem Umlauf der Förder- und Sammeleinheit 41 automatisch in den Schaltbereich 581 des Schaltfensters 580 ein, wenn sie nicht durch den Kupplungsschalter 64, der an der ersten Schaltklinke 61 angeordnet ist, zurückgedrückt wird. Die Kupplungsvorrichtung ist daher immer aktiviert, es sei denn, sie wird durch Betätigen des Kupplungsschalters 64 deaktiviert, so dass der Kupplungsvorgang verhindert wird.

Der Kupplungsschalter 64 ist über einen Schalthebel 55 betätigbar. Dieser ist ebenfalls in Fig. 3 (a) gezeigt.

Der Schalthebel 55 ist mit der Kraft eines Vorspannelementes 553 von einer Grundposition G, in der er nicht mit dem Kupplungsschalter 64 zusammenwirkt, in eine Betätigungsposition B, in der er den Kupplungsschalter 64 betätigt, und gegen die Kraft des Vorspannelementes 553 wieder zurück verstellbar. Zum Betätigen des Kupplungsschalters 64 weist der Schalthebel 55 als Betätigungsmittel eine Betätigungsrolle 552 auf, die im Betätigungszustand B als Anschlag für den Kupplungsschalter 64 dient.

Zum Verstellen des Schalthebels 55 ist ein Schaltmittel 51 vorgesehen. Das Schaltmittel 51 ist mechanisch unabhängig von der Sensoranordnung 46, 52 schaltbar. Zum Schalten des Schaltmittels 51 ist eine Steuerungseinheit 7 vorgesehen, die das Schaltmittel 51 in Abhängigkeit vom Füllgrad im Sammelkanal 45 schaltet. Dabei wird der Füllgrad im Sammelkanal 45 zyklisch, das heißt insbesondere bei jeder Umdrehung der Förder- und Sammeleinheit 41, erfasst. Die Entscheidung, ob das Schaltmittel 51 geschaltet wird, erfolgt anhand eines Sollwerts für den Füllgrad in der Sammelkammer 45. Der Sollwert kann vom Bediener an einer Bedienerkonsole einstellbar sein.

Das Schaltmittel 51 ist als elektromagnetisch schaltbare Federkraftbremse ausgebildet. Es ist reversibel von einem aktiven Zustand a, in dem es den Schalthebel 55 freigibt, in einen inaktiven Zustand i umschaltbar, in dem es den Schalthebel 55 reib- und/oder formschlüssig in der Grundposition G hält. Im inaktiven, nicht elektrisch angesteuerten Zustand i bringt das Schaltmittel 51 daher seine Haltekraft auf. Im aktiven Zustand a des Schaltmittels 51, in dem es bestromt ist, kann der Schalthebel 55 hingegen mit der Kraft des Vorspannelementes 553 von der Grundposition G aus in die Betätigungsposition B verstellt werden. In der Betätigungsposition B betätigt der Schalthebel 55 den Kupplungsschalter 64. Die Kupplungsvorrichtung 6 wird dadurch deaktiviert. Im vorliegenden Ausführungsbeispiel wird der Kupplungsvorgang dadurch verhindert.

Zwischen dem Schaltmittel 51 und dem Schalthebel 55 kann es eine Übersetzungsstufe geben. An einem Schaltende 554 (s. Fig. 3 (a)) des Schalthebels 55 kann dafür eine Verzahnung (nicht bezeichnet) angeordnet sein, die zur Übersetzung dient und mit einem Stirnrad (nicht bezeichnet) des Schaltmittels 51 in Eingriff ist. Dabei kann die Übersetzung so gewählt sein, dass das wirkende Haltemoment des Schaltmittels 51 kleiner ausgelegt ist, als das Moment, welches über das Vorspannelement 553 auf den Schalthebel 55 aufgebracht wird und zum Betätigen der Kupplungsvorrichtung 6 erforderlich ist. Das Schaltmittel 51 kann in einer alternativen Ausführungsform auch direkt auf den Schalthebel 55 wirken und dafür beispielsweise auf der Lagerachse 53 des Schalthebels 55 angeordnet sein.

Der Presskolben der Quaderballenpresse 1 und die Förder- und Sammelvorrichtung 4 sind so aufeinander abgestimmt, dass sich die Förder- und Sammeleinheit 41 mit jedem Kolbenhub einmal vollständig umdreht. In einem Zeitfenster während des Rückhubs des Presskolbens kann das Erntegut in den Pressraum 16 gefördert werden. Die Förder- und Sammelvorrichtung 4 ist so eingerichtet, dass die Entscheidung, ob das Erntegut im folgenden Zeitfenster in den Pressraum 16 gefördert wird oder nicht, so spät wie möglich erfolgt.

Fig. 3 (a) zeigt die Förder- und Sammelvorrichtung 4 in einer Ausgangsposition. In der Ausgangsposition befindet sich die erste Kurvenscheibe 422 im fixierten Zustand FZ, so dass sich die Förder- und Sammeleinheit 41 im Sammelmodus S befindet. Das Schaltmittel 51 befindet sich im inaktiven Zustand i, so dass es den Schalthebel 55 in der Grundposition hält.

Der Drehwinkelsensor 52 der Sensoreinheit 52, 46 erfasst über die Tastschwinge 46 den Füllgrad in der Sammelkammer 45.

Für die Entscheidung, ob das Erntegut im aktuellen oder erst im folgenden Zeitfenster aus der Sammelkammer gefördert wird, hält das Schaltmittel 51 den Schalthebel 55 so lange wie möglich in der Grundposition G. Dadurch wird der Kupplungsschalter 64 nicht betätigt, so dass die erste Schaltklinke 61 in den Schaltbereich 581 des Schaltfensters 580 einläuft.

Die Steuerungseinheit 7 ist dazu eingerichtet, den Kupplungsvorgang zu verhindern, solange der Sollwert noch nicht erreicht ist. Dies zeigt Fig. 3 (b).

Dafür wird das Schaltmittel 51 durch die Steuerungseinheit 7 aktiviert. Das Schaltmittel 51 wird bestromt, so dass das Haltemoment des Schaltmittels 51, insbesondere durch elektromagnetische Kraft, aufgehoben wird. Eine dabei auftretende Trennzeit, in der der Schalthebel 55 nicht mehr von dem Haltemoment des Schaltmittels 51 gehalten wird, kann von der Steuerungseinheit 7 berücksichtigt werden. Da das Haltemoment des Schaltmittels 51 aufgehoben ist, wird der Schalthebel 55 von der Grundposition G in die Betätigungsposition B verschwenkt. Die Betätigungsrolle 552 betätigt den Kupplungshebel 64 gegen die Kraft des Kraftmittels 63, so dass die Kupplungsvorrichtung 6 deaktiviert wird. Die erste Schaltklinke 61 wird dadurch aus dem Schaltbereich 581 des Schaltfensters 580 gehoben. Das Schaltfenster 580 mit seinem Schaltbereich 581 ist in Fig. 3 (a) und (b) fett dargestellt.

Die Kupplungsvorrichtung 6 kuppelt die Antriebsscheibe 57 daher nicht an die Rotorwelle an, so dass die Antriebsscheibe 57 nicht gedreht wird. Daher wird die erste Kurvenscheibe nicht angetrieben und die Förder- und Sammeleinheit verbleibt im Sammelmodus S.

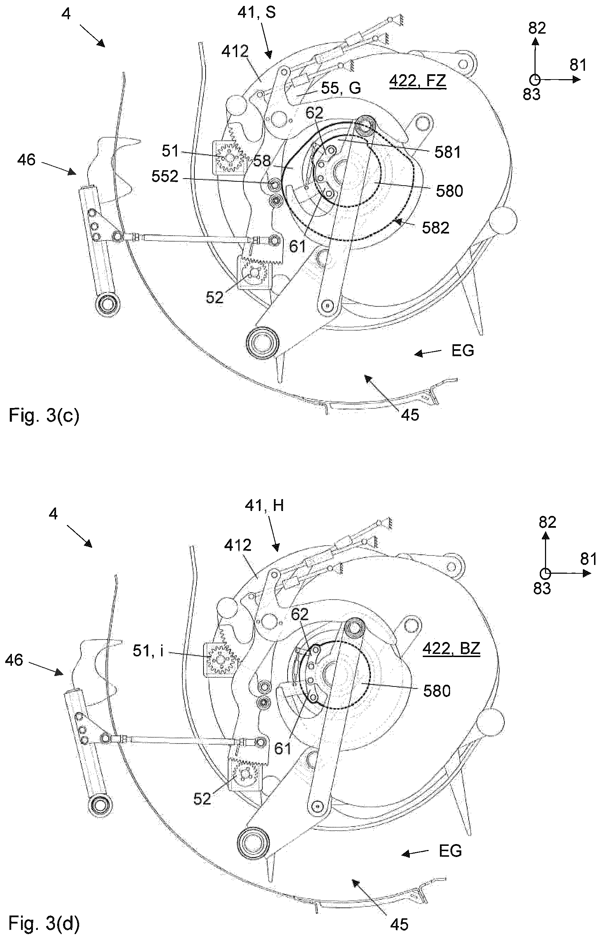

Die Kupplungsscheibe 58 weist eine Außenkontur (nicht bezeichnet) auf, die zum Zurückstellen des Schalthebels 55 von der Betätigungsposition B in die Grundposition G vorgesehen ist. Beim weiteren Umdrehen der Kupplungsscheibe 58 gerät die Betätigungsrolle 552 in Anlage an die Außenkontur der Kupplungsscheibe 58. Dadurch wird der Schalthebel 55 in die Grundposition G zurück verschwenkt. Dies kann sowohl bei aktiviertem als auch bei deaktiviertem Schaltmittel 51 erfolgen. Das Zurückstellen des Schalthebels 55 zeigt die Fig. 3 (c). Die Außenkontur der Kupplungsscheibe ist in Fig. 3 (c) fett dargestellt. Durch das Zurückstellen des Schalthebels 55 wird der Kupplungsschalter 64 nicht mehr betätigt, und die Kupplungsvorrichtung 6 aktiviert.

Fig. 3 (d) zeigt die Förder- und Sammelvorrichtung 4 beim folgenden Umlauf der Förder- und Sammeleinheit 41. Die Kupplungsvorrichtung 6 befindet sich im aktiven Zustand. Der Sollwert für den Füllgrad ist erreicht und der Kupplungsvorgang wurde nicht verhindert. Dadurch sind beide Schaltklinken 61, 62 in den Schaltbereich 581 des Schaltfensters 580 eingelaufen. Die Antriebsscheibe ist daher an die Rotorwelle 410 angekuppelt. Sie wird gemeinsam mit der Förder- und Sammeleinheit 41 um die Rotorachse 91 gedreht.

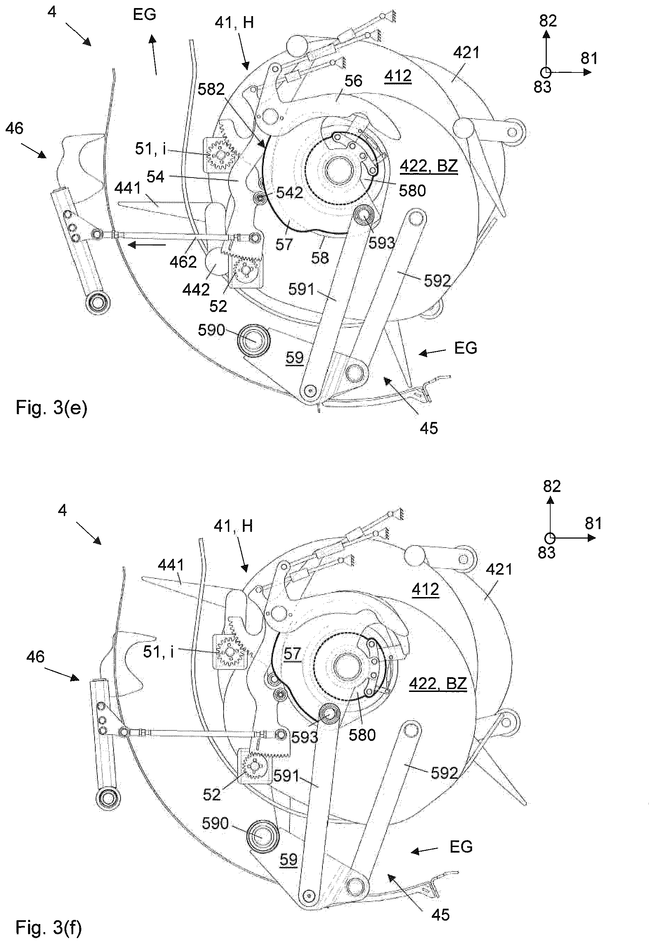

Die Antriebsscheibe 57 drückt den ersten Koppeltrieb 591 aus dem Nullsteller 56. Dadurch wird die Schwinge 59 um den Schwingensteg 590 verschwenkt. Die Schwinge 59 treibt über den zweiten Koppeltrieb 592 die erste Kurvenbahn 42 an. Diese wird dann hin- und zurück geschwenkt. Dadurch werden die Zubringerzinken 441 so gedreht, dass sie sich beim Annähern an die Auslassöffnung zunächst nicht aus dem Sammelkanal drehen. Dadurch können sie das Erntegut im Sammelkanal durch die Auslassöffnung in den Presskanal fördern. Die Förder- und Sammeleinheit 41 befindet sich im Hubmodus H. Die zeigt Fig. 3 (e).

Damit die Halteplatten 461 der Tastschwinge 46 der Sensoreinheit 46, 52 das Herausfördern des Ernteguts nicht behindern, wird die Tastschwinge 46 verschwenkt, so dass die Halteplatten 461 nicht mehr in den Sammelkanal 45 eingreifen. Dafür wird eine Antriebskontur (nicht bezeichnet) der Antriebsscheibe 58 genutzt. Die Antriebskontur ist in den Fig. 3 (e) und (f) durch eine fette Linie gezeigt. Am Tasthebel 54 ist dafür ein Anlagemittel 542 vorgesehen, dass in Anlage an die Antriebskontur gerät und den Tasthebel 54 verschwenkt. Mit dem Verbindungsarm 462 wird dabei die Tastschwinge 46 verschwenkt. Dies ist durch einen Pfeil schematisch dargestellt.

Nachdem die zum Ausschwenken der Tastschwinge 46 vorgesehene Antriebskontur am Anlagemittel 542 vorbeigelaufen ist, wird der Tasthebel 54, und mit ihm die Tastschwinge 46, mit der Kraft des Vorspannmittels 543 zurückgeschwenkt. Dadurch erfasst die Sensoreinheit 46, 52 über die Tastschwinge 46 wieder den Füllgrad in der Sammelkammer 45. Dies zeigt Fig. 3 (f). Die Förder- und Sammeleinheit 41 befindet sich noch im Hubmodus H.

Bei der folgenden Umdrehung wird erneut entschieden, ob der Sollwert für den Füllgrad erreicht ist. Falls ja, verbleibt das Schaltmittel 51 im inaktiven Zustand i. Die erste Kurvenbahn 422 wird weiter verschwenkt und die Zubringerzinken 441 fördern das Erntegut aus dem Sammelkanal 45 heraus in den Presskanal 16.

Sofern der Füllgrad nicht erreicht ist, wird das Schaltmittel 51 in den aktiven Zustand a geschaltet und daher bestromt. Dadurch wird erneut der Schalthebel 55 von der Grundposition G in die Betätigungsposition B verstellt. Das Betätigungsmittel 552 betätigt den Kupplungsschalter 64, so dass die Kupplungsvorrichtung 6 deaktiviert wird und zunächst die erste Schaltklinke 61 und anschließend die zweite Schaltklinke 62 aus dem Schaltbereich 581 des Schaltfensters 580 ausgerückt werden. Die Antriebsscheibe 57 wird dann nicht mehr angetrieben und die erste Koppelstange 591 vom Nullsteller 56 eingefangen. Die Förder- und Sammeleinheit 41 befindet sich wieder im Sammelmodus S. Dieser Vorgang wiederholt sich zyklisch mit jeder Umdrehung der Förder- und Sammeleinheit 41.

Da die Erfassung des Füllgrads und Umschalten des Schaltmittels 51 mechanisch voneinander getrennt sind, können keine Fehlschaltungen der Förder- und Sammelvorrichtung 4 mehr auftreten, die durch die mechanische Kopplung verursacht sind. Die Nutzung einer elektromagnetisch betätigten Federkraftbremse oder Kupplung als Schaltmittel 51 hat den Vorteil, dass die Förder- und Sammelvorrichtung 4 bei Ausfall des Bordnetzes in den Hubmodus H läuft und Erntegut aus dem Sammelkanal 45 fördert. Dadurch kann bei einem solchen Ausfall keine Verstopfung des Sammelkanals 45 auftreten. Zudem werden dadurch dauerhafte Bewegungen vermieden, die Verschleiß der Bauteile zur Folge haben.

## Patentansprüche

1. Förder- und Sammelvorrichtung (4) für eine landwirtschaftliche Erntegutpresse (1),
• mit einer antreibbaren Förder- und Sammeleinheit (41), die von einem Sammelmodus (S), in der sie zum Sammeln von Erntegut in eine Sammelkammer (45) vorgesehen ist, in einen Hubmodus (H), in der sie zum Herausfördern des Erntegutes aus der Sammelkammer (45) vorgesehen ist, umschaltbar ist, wobei die Förder- und Sammeleinheit (41) eine Zubringerleiste (44) umfasst, deren Zubringerzinken (441) in Abhängigkeit vom Modus (S, H) der Förder- und Sammeleinheit (41) drehbar sind,
• mit einer ersten Kurvenbahn (422), die zum Drehen der Zubringerzinken (441) der Zubringerleiste (44) vorgesehen ist, und die von einem fixierten Zustand (FZ), in dem sie ortsfest in der Förder- und Sammelvorrichtung (4) angeordnet ist und sich die Förder- und Sammeleinheit (41) im Sammelmodus (S) befindet, in einen bewegten Zustand (BZ), in dem sie von der Förder- und Sammeleinheit (41) angetrieben ist und sich die Förder- und Sammeleinheit (41) im Hubmodus (H) befindet, umschaltbar ist,
• mit einer Kupplungsvorrichtung (6), die in einem Kupplungsvorgang zum Wirkverbinden der ersten Kurvenbahn (422) mit der Förder- und Sammeleinheit (41) vorgesehen ist, so dass die erste Kurvenbahn (422) angetrieben wird, und
• mit einer Sensoreinheit (46, 52), die zum Erfassen eines Füllgrades der Sammelkammer (45) vorgesehen ist,
wobei die Förder- und Sammelvorrichtung (4) ein Schaltmittel (51) aufweist, das dazu vorgesehen ist, den Kupplungsvorgang der Kupplungsvorrichtung (6) in Abhängigkeit vom Füllgrad der Sammelkammer (45) auszulösen oder zu verhindern,
**dadurch gekennzeichnet, dass**
das Auslösen oder Verhindern des Kupplungsvorgangs mechanisch unabhängig von der Erfassung des Füllgrades der Sammelkammer (45) erfolgt, wobei die Kupplungsvorrichtung (6) ein Kraftmittel (63) aufweist, das zum Aktivieren der Kupplungsvorrichtung (6) vorgesehen ist, wobei bei aktivierter Kupplungsvorrichtung (6) der Kupplungsvorgang zwangsgesteuert durchführbar ist, wobei das Schaltmittel (51) lediglich zum Deaktivieren der Kupplungsvorrichtung (6) von einem inaktiven Zustand (i) in einen aktiven Zustand (a) umgeschaltet, und daher bestromt, werden muss.

2. Förder- und Sammelvorrichtung (4) nach Anspruch 1, **dadurch gekennzeichnet, dass** sie einen Schalthebel (55) umfasst, mit dem das Schaltmittel (51) zusammenwirkt, wobei das Schaltmittel (51) reversibel von dem aktiven Zustand (a), in dem es den Schalthebel (55) freigibt, in den inaktiven Zustand (i) umschaltbar ist, in dem es den Schalthebel (55) reib- und/oder formschlüssig in einer Position (G, B) hält.

3. Förder- und Sammelvorrichtung (4) nach einem der vorherigen Ansprüche, **dadurch gekennzeichnet, dass** ein Haltemoment des Schaltmittels (51), insbesondere durch elektromagnetische Kraft, aufgehoben wird, wenn das Schaltmittel (51) bestromt wird.

4. Förder- und Sammelvorrichtung (4) nach einem der vorherigen Ansprüche, **dadurch gekennzeichnet, dass** der Schalthebel (55) im aktiven Zustand (a) des Schaltmittels (51) von einer Grundposition (G), in der er nicht mit der Kupplungsvorrichtung (6) wirkverbunden ist, in eine Betätigungsposition (B) verstellbar ist, in der er mit der Kupplungsvorrichtung (6) wirkverbunden ist und den Kupplungsvorgang auslöst oder verhindert.

5. Förder- und Sammelvorrichtung (4) nach einem der vorherigen Ansprüche, **dadurch gekennzeichnet, dass** das Schaltmittel (51) eine elektromagnetisch betätigte Federkraftbremse oder Kupplung ist.

6. Förder- und Sammelvorrichtung (4) nach einem der vorherigen Ansprüche, **dadurch gekennzeichnet, dass** die Kupplungsvorrichtung (6) einen Kupplungsschalter (64) aufweist, wobei die Kupplungsvorrichtung (6) durch Betätigen des Kupplungsschalters (64) deaktivierbar ist.

7. Förder- und Sammelvorrichtung (4) nach einem der vorherigen Ansprüche, **dadurch gekennzeichnet, dass** sie eine Steuerungseinheit (7) umfasst, die zum Steuern des Schaltmittels (51) und/oder zum Erfassen des Füllgrads der Sammelkammer (45) eingerichtet ist.

8. Förder- und Sammelvorrichtung (4) nach einem der vorherigen Ansprüche, **dadurch gekennzeichnet, dass** sie dazu eingerichtet ist, den Füllgrad der Sammelkammer (45) zyklisch, insbesondere bei jeder vollen Umdrehung der Förder- und Sammeleinheit (41), zu erfassen.

9. Förder- und Sammelvorrichtung (4) nach einem der vorherigen Ansprüche, **dadurch gekennzeichnet, dass** die Förder- und Sammeleinheit (41) als Rotor ausgebildet und um eine zentrale Rotorachse (91) drehbar vorgesehen ist, wobei die Zubringerleiste (44) von der Rotorachse (91) beabstandet angeordnet ist.

10. Förder- und Sammelvorrichtung (4) nach einem der vorherigen Ansprüche, **dadurch gekennzeichnet, dass** die Kupplungsvorrichtung (6) dazu eingerichtet ist, eine Antriebsscheibe (58) an die Förder- und Sammeleinheit (41) anzukuppeln, so dass sich die Antriebsscheibe (58) mit der Förder- und Sammeleinheit (41) dreht.

11. Förder- und Sammelvorrichtung (4) nach einem der vorherigen Ansprüche, **dadurch gekennzeichnet, dass** die Antriebsscheibe (58) zum Antreiben einer Schwinge (59) ausgebildet ist, die die erste Kurvenbahn (422) im Hubmodus (H) mittels eines Koppeltriebs (592) antreibt.

12. Förder- und Sammelvorrichtung (4) nach einem der vorherigen Ansprüche, **dadurch gekennzeichnet, dass** die Kupplungsvorrichtung (6) eine Kupplungsscheibe (58) umfasst, die eine Außenkontur (582) aufweist, die zum Zurückstellen des Schalthebels (55) von der Betätigungsposition (B) in die Grundposition (G) vorgesehen ist.

13. Förder- und Sammelvorrichtung (4) nach einem der vorherigen Ansprüche, **dadurch gekennzeichnet, dass** das Schaltmittel (51) als Bremse ausgebildet ist, und dass das Zurückstellen des Schalthebels (55) von der Betätigungsposition (B) in die Grundposition (G) zumindest zeitweise gegen eine Haltekraft des Schaltmittels (51) erfolgt.

14. Landwirtschaftliche Erntegutpresse (1), insbesondere Quaderballenpresse, mit einer Förder- und Sammelvorrichtung (4) nach einem der vorherigen Ansprüche.

15. Landwirtschaftliche Erntegutpresse (1) nach Anspruch 14, **dadurch gekennzeichnet, dass** der Sollwert für den Füllgrad der Sammelkammer (45) von einem Bediener der Erntegutpresse (1) einstellbar ist.

## Claims

1. Conveying and collection device (4) for an agricultural harvesting press (1),
• comprising a drivable conveying and collection unit (41) which can be switched from a collection mode (S), in which it is intended to collect harvested goods into a collection chamber (45), to a lifting mode (H), in which it is intended to convey the harvested goods out of the collection chamber (45), the conveying and collection unit (41) comprising a feeder bar (44) of which the feeder tines (441) are rotatable depending on the mode (S, H) of the conveying and collection unit (41),
• comprising a first cam track (422) which is intended to rotate the feeder tines (441) of the feeder bar (44) and which can be switched from a fixed state (FZ), in which it is arranged in a stationary manner in the conveying and collection device (4) and the conveying and collection unit (41) is in the collection mode (S), to a moving state (BZ), in which it is driven by the conveying and collection unit (41) and the conveying and collection unit (41) is in the lifting mode (H),
• comprising a coupling device (6) which is provided in a coupling process for operatively connecting the first cam track (422) to the conveying and collection unit (41) so that the first cam track (422) is driven, and
• comprising a sensor unit (46, 52) which is intended to detect a fill level of the collection chamber (45),
the conveying and collection device (4) having a switching means (51) which is intended to trigger or prevent the coupling process of the coupling device (6) depending on the fill level of the collection chamber (45),
**characterized in that**
the coupling process is triggered or prevented mechanically independently of the fill level of the collection chamber (45) being detected, the coupling device (6) having a power means (63) which is intended to activate the coupling device (6), it being possible, when the coupling device (6) is activated, for the coupling process to be carried out in a forced-controlled manner, the switching means (51) having to be switched from an inactive state (i) to an active state (a), and therefore having to be supplied with current, only for deactivation of the coupling device (6).

2. Conveying and collection device (4) according to claim 1,
**characterized in that** it comprises a shift lever (55) with which the switching means (51) engages, the switching means (51) being reversibly switchable from the active state (a), in which it releases the shift lever (55), to the inactive state (i), in which it frictionally and/or form-fittingly holds the shift lever (55) in a position (G, B).

3. Conveying and collection device (4) according to either of the preceding claims, **characterized in that** a holding torque of the switching means (51), in particular by electromagnetic force, is canceled when the switching means (51) is supplied with current.

4. Conveying and collection device (4) according to any of the preceding claims, **characterized in that** in the active state (a) of the switching means (51), the shift lever (55) can be adjusted from a basic position (G), in which it is not operatively connected to the coupling device (6), to an actuating position (B) in which it is operatively connected to the coupling device (6) and triggers or prevents the coupling process.

5. Conveying and collection device (4) according to any of the preceding claims, **characterized in that** the switching means (51) is an electromagnetically actuated spring-loaded brake or clutch.

6. Conveying and collection device (4) according to any of the preceding claims, **characterized in that** the coupling device (6) has a clutch switch (64), it being possible for the coupling device (6) to be deactivated by actuating the clutch switch (64).

7. Conveying and collection device (4) according to any of the preceding claims, **characterized in that** it comprises a control unit (7) which is designed to control the switching means (51) and/or to detect the fill level of the collection chamber (45).

8. Conveying and collection device (4) according to any of the preceding claims, **characterized in that** it is designed to detect the fill level of the collection chamber (45) cyclically, in particular at each full revolution of the conveying and collection unit (41).

9. Conveying and collection device (4) according to any of the preceding claims, **characterized in that** the conveying and collection unit (41) is designed as a rotor and is provided for rotation about a central rotor axis (91), the feeder bar (44) being arranged at a distance from the rotor axis (91).

10. Conveying and collection device (4) according to any of the preceding claims, **characterized in that** the coupling device (6) is designed to couple a drive disc (58) to the conveying and collection unit (41) so that the drive disc (58) rotates with the conveying and collection unit (41).

11. Conveying and collection device (4) according to any of the preceding claims, **characterized in that** the drive disc (58) is designed to drive a rocker (59) which drives the first cam track (422) in the lifting mode (H) by means of a coupling drive (592).

12. Conveying and collection device (4) according to any of the preceding claims, **characterized in that** the coupling device (6) comprises a clutch disc (58) having an outer contour (582) intended for returning the shift lever (55) from the actuating position (B) to the basic position (G).

13. Conveying and collection device (4) according to any of the preceding claims, **characterized in that** the switching means (51) is designed as a brake, **and in that** the shift lever (55) is returned from the actuating position (B) to the basic position (G) at least temporarily against a holding force of the switching means (51).

14. Agricultural harvesting press (1), in particular a square bale press, comprising a conveying and collection device (4) according to any of the preceding claims.

15. Agricultural harvesting press (1) according to claim 14,
**characterized in that** the target value for the fill level of the collection chamber (45) can be adjusted by an operator of the harvesting press (1).

## Revendications

1. Dispositif de transfert et de collecte (4) pour une presse de produits agricoles coupés (1) comprenant :
- une unité de transfert et de collecte (41) entrainée qui peut commuter d'un mode de collecte (S) dans lequel elle collecte des produits coupés dans une chambre de collecte (45) et un mode de levage (H) dans lequel elle évacue les produits coupés de la chambre de collecte (45),
* l'unité de transfert et de collecte (41) ayant une barre d'alimentation (44) dont les dents d'alimentation (441) tournent en fonction du mode (S, H) de l'unité de transfert et de collecte (41),
- un premier chemin de came (422) pour tourner les dents d'alimentation (441) de la barre d'alimentation (44) qui peut être commutée d'un état de fixation (FZ) dans lequel elle est orientée de manière fixe dans le dispositif de transfert et de collecte (4), dans lequel l'unité de transfert et de collecte (41) est en mode de collecte (S) vers un état mobile (BZ), dans lequel elle est entrainée par l'unité de transfert et de collecte (41) dans lequel l'unité de transfert et de collecte (41) est en mode de levage (H),
- un dispositif de couplage (6) qui dans un mode de couplage relie en coopération le premier chemin de came (422) à l'unité de transfert et de collecte (41) pour entrainer le premier chemin de came (422), et
- une unité de capteur (46, 52) pour saisir le niveau de remplissage de la chambre de collecte (45),
* le dispositif de transfert et de collecte (4) ayant un moyen de commutation (51) pour déclencher ou retenir l'opération de couplage du dispositif de couplage (6) en fonction du niveau de remplissage de la chambre de collecte (45),
dispositif **caractérisé en ce que**
le déclenchement ou la retenue de l'opération de couplage est mécaniquement indépendant de la saisie du niveau de remplissage de la chambre de collecte (45),
* le dispositif de couplage (6) ayant un moyen de force (63) pour activer le dispositif de couplage (6),
* l'opération de couplage s'effectue de manière commandée de force lorsque le dispositif de couplage (6) est activé,
* le moyen de commutation (51) doit être commuté et ainsi alimenté uniquement pour désactiver le dispositif de couplage (6) en le commutant d'un état inactif (i) dans un état actif (a).

2. Dispositif de transfert et de collecte (4) selon la revendication 1,
**caractérisé en ce qu'**il comprend
un levier de commutation (55) coopérant avec le moyen de commutation (51),
* le moyen de commutation (51) commutant de manière réversible de l'état activé (a) dans lequel il libère le levier de commutation (55), vers l'état inactif (i) dans lequel il libère le levier de commutation (55) dans l'état inactif (i) dans lequel il maintient le levier de commutation (55) par une liaison par frottement et/ou la forme dans une position (G, B).

3. Dispositif de transfert et de collecte (4) selon l'une des revendications précédentes,
**caractérisé en ce que**
le couple de maintien du moyen de commutation (51) est supprimé notamment par une force électromagnétique lorsque le moyen de commutation (51) est alimenté en courant.

4. Dispositif de transfert et de collecte (4) selon l'une des revendications précédentes,
**caractérisé en ce que**
le levier de commutation (55) peut être déplacé de l'état active (a) du moyen de commutation (51) dans une position de base (G) dans laquelle il n'est pas relié en coopération au dispositif de couplage (6) vers une position d'actionnement (B) dans laquelle il est relié en coopération au dispositif de couplage (6) et déclenche ou retient l'opération de couplage.

5. Dispositif de transfert et de collecte (4) selon l'une des revendications précédentes,
**caractérisé en ce que**
le moyen de commutation (51) est un frein à ressort actionné de manière électromagnétique ou un embrayage.

6. Dispositif de transfert et de collecte (4) selon l'une des revendications précédentes,
**caractérisé en ce que**
le dispositif de couplage (6) a un commutateur de couplage (64),
* le dispositif de couplage (6) étant désactivé par l'actionnement du commutateur de couplage (64).

7. Dispositif de transfert et de collecte (4) selon l'une des revendications précédentes,
**caractérisé en ce qu'**il comprend
une unité de commande (7) pour commander le moyen de commutation (51) et/ou pour saisir le niveau de remplissage de la chambre de collecte (45).

8. Dispositif de transfert et de collecte (4) selon l'une des revendications précédentes,
**caractérisé en ce qu'**il
est prévu pour saisir le niveau de remplissage de la chambre de collecte (45) de manière cyclique notamment à chaque tour complet de l'unité de transfert et de collecte (41).

9. Dispositif de transfert et de collecte (4) selon l'une des revendications précédentes,
**caractérisé en ce que**
l'unité de transfert et de collecte (41) est sous la forme d'un rotor tourant autour d'un axe central de rotor (91),
* la barre d'alimentation (44) étant écarté de l'axe de rotor (91).

10. Dispositif de transfert et de collecte (4) selon l'une des revendications précédentes,
**caractérisé en ce que**
le dispositif de couplage (6) est prévu pour coupler le disque d'entrainement (58) à l'unité de transfert et de collecte (41) pour que le disque d'entrainement (58) tourne avec l'unité de transfert et de collecte (41).

11. Dispositif de transfert et de collecte (4) selon l'une des revendications précédentes,
**caractérisé en ce que**
le disque d'entrainement (58) est prévu pour entrainer une bielle (59) qui entraine le premier chemin de came (422) en mode de soulèvement (H) par une bielle de couplage (592).

12. Dispositif de transfert et de collecte (4) selon l'une des revendications précédentes,
**caractérisé en ce que**
le dispositif de couplage (6) a un disque de couplage (58) ayant un contour extérieur (582) pour rappeler le levier de commutation (55) de la position d'actionnement (B) dans la position de base (G).

13. Dispositif de transfert et de collecte (4) selon l'une des revendications précédentes,
**caractérisé en ce que**
le moyen de commutation (51) est en forme de frein et le rappel du levier de commutation (55) de sa position d'actionnement (B) dans sa position de base (G) se fait au moins temporairement contre une force de maintien du moyen de commutation (51).

14. Presse agricole (1) notamment presse à balles cubiques comportant un dispositif de transfert et de collecte (4) selon l'une des revendications précédentes.

15. Presse agricole (1) selon la revendication 14,
**caractérisée en ce que**
la valeur de consigne du niveau de remplissage de la chambre de collecte (45) est réglée par l'opérateur de la presse (1).
